Europäisches Patentamt

European Patent Office

Office européen des brevets

(11) Publication number: **0 090 571**
A1

# EUROPEAN PATENT APPLICATION

(21) Application number: 83301567.0

(51) Int. Cl.³: **A 23 L 1/237**

(22) Date of filing: 21.03.83

(30) Priority: 29.03.82 US 362951

(43) Date of publication of application: 05.10.83
Bulletin 83/40

(84) Designated Contracting States: **DE FR GB SE**

(71) Applicant: **MORTON THIOKOL, INC., 110 North Wacker
Drive, Chicago Illinois 60606 (US)**

(72) Inventor: **Davis, Jack W., 1652 Tappan Street, Woodstock
Illinois 60098 (US)**
Inventor: **Fiedelman, Howard W., 812 Muriel Street,
Woodstock Illinois 60098 (US)**
Inventor: **Kuhajek, Eugene J., 973 Aberdeen Street,
Crystal Lake Illinois 60014 (US)**

(74) Representative: **Hose, Cyril Gustav Bidwell et al, Baron
& Warren 18 South End Kensington, London W8 5BU
(GB)**

(54) Flaked salt composition and process of preparing the same.

(57)    A substantially homogeneous flaked salt composition comprising sodium chloride and potassium chloride is provided wherein the concentration on a relative proportion basis of sodium chloride and potassium chloride in the flaked composition ranges from about 30 weight % sodium chloride and 70 weight % potassium chloride to about 70 weight % sodium chloride and 30 weight percent potassium chloride. The flaked composition is obtained by a process which comprises first pulverizing to a particle size smaller than about 70 mesh U.S. Standard Sieve Series a majority of the particles of an admixture of sodium chloride and potassium chloride containing on a relative proportion basis from about 30 to about 70 weight % of sodium chloride and from about 70 to about 30 weight % of potassium chloride and compacting said pulverized admixture into flakes. The flakes may then be screened to provide various particle sizes of flaked product.

The flaked salt composition so prepared is more homogeneous, coarser, lighter in weight, more cakeresistant, attrition-resistant, and more liquid absorptive and flowable than a flaked sodium chloride-potassium chloride composition of the same NaCl-KCl concentration prepared without said preliminary grinding step.

ACTORUM AG

"FLAKED SALT COMPOSITION AND PROCESS OF PREPARING THE SAME"

This invention relates to a substantially homogeneous flaked composition comprising sodium and potassium chlorides.

Salted snacks such as pretzels, crackers, fat-fried chips, and roasted nuts contribute a significant quantity of sodium in the diet. As a result of recent pressures for dietary reduction in sodium intake and of pressures towards sodium labelling of foot items, snack manufacturers have become interested in reducing the sodium level in their products.

To date, little progress has been made toward substantial lessening the sodium content of salted snacks. The reason in major part appears to be lack of alternatives rather than of interest. The mild saline flavour provided by sodium chloride (salt) topping is of crucial importance to consumer acceptance of these snack products. Unsalted or undersalted snacks are simply too bland, and substitutes such as potassium chloride, or potassium chloride together with various organic acids, are unacceptably bitter or tart. Furthermore, physical form is of equal importance. Salt substitutes are generally not made available in the variety of sizes and forms necessary for snack topping applications. A relatively coarse particle is required for optimum enhancement of appearance on pretzels and crackers, and relatively fine irregularly-shaped flaked particles are desirable for chip and nut toppings to assure adequate adherence and rapid solubility for quickly-sensed salty flavour.

United States Patent Re 27,981 sets forth taste panel studies which demonstrate, for example, that a 1:1 mixture of potassium chloride and sodium chloride may be substituted on an equal weight basis for sodium chloride, with a resultant 50% decrease in the sodium level. A 1:1 granular mixture of potassium chloride and sodium chloride is now marketed under the trademark "MORTON LITE SALT" as a retail reduced-sodium salt product for use in the home. However, this mixture of granular components is not in a physical form acceptable for use in snack toppings. Therefore, a flake-type product is required.

In addition to the above-mentioned snack food uses, a reduced-sodium flake-type product would have a variety of other applications. Coarse grades are desirable for vat salting of cheddar and Colby cheese, for dry curing of meats by surface salting, and for koshering of beef and poultry. Coarse and medium grades are used for seasoned salt condiments and for meat tenderizer compositions. Fine and extra fine grades are blended into cake mixes, self-raising flour, breadings (bread mixes) and batter mixes.

A flake-type form of sodium chloride can be produced by passing granular sodium chloride crystals, commercially available in the minus 30 to plus 70 mesh screen size range characteristic of table salt, between smooth-faced opposed rollers maintained under high pressure, thereby compacting the salt into a flake form suitable for use in a variety of specialized applications, including snack toppings.

The "mesh" screen sizes referred to herein are those of the U.S. Standard Sieve Series. The terminology "minus 30 plus 70 mesh", also indicated as "-30 + 70", refers to particles small enough to pass through a 30 mesh screen (-30) but coarse enough to be retained on a 70 mesh screen (+70).

However, as is demonstrated in the examples hereinafter described, when a 1:1 mixture of potassium chloride and sodium chloride in the aforesaid usual particle (mesh) size range was subjected to the same flaking, i.e. compacting, process, it was found that the resultant flaked product, when screened into its several particle size fractions, was not homogeneous throughout all of the particle size fractions with respect to the 1:1 ratio of NaCl:KCl. That is, the sodium chloride component of the admixture was disproportionately higher or lower in certain of the finer (smaller) screen fractions than in other fractions.

This becomes a substantial problem in a production operation, since certain screen fractions are not in demand. Therefore, for a practical production process, these less desirable fractions must be circulated back into the flaking process to produce other grades, generally coarser flakes. It is apparent that recycling sodium chloride-enriched or deficient fines into the flaking process will cause an imbalance in the 1:1 ratio of sodium chloride and potassium chloride and make the operation difficult to control with respect to maintaining a homogeneous final product. In addition, if a 1:1 NaCl:KCl mixture flaked product is to be made available commercially, it is necessary that each screen fraction of the flaked product be substantially of the same composition, i.e. a mixture of NaCl and KCl in a 1:1 ratio. As the data of Example 1 hereinafter set forth clearly indicate, these conditions cannot be met by feeding the normal granular -30 + 70 mesh sodium chloride and potassium chloride particles to a flaking operation.

Further, in addition to the requirement of substantial compositional homogeneity, the following attributes of a flaked salt composition are also required:

1. Sufficient coarseness for ease of application and adherence to the surface of snack foods.
2. Relatively low bulk density for homogeneous admixture with other food ingredients which also have a fairly low bulk density.
3. Relatively high resistance to caking under humid atmospheric conditions.
4. Fairly high resistance to attrition under customary conditions of handling.
5. Fairly high retention of liquids, indicative of effective mixing with liquid ingredients in blended food products.
6. Good flowability for efficient handling in commercial manufacturing processes.

It is, therefore, an object of the prevent invention to solve the problem of variable composition with varying particle size of a flaked sodium chloride-potassium chloride composition and to provide a flaked NaCl-KCl salt composition which is substantially homogeneous in all screened fractions of various particle size ranges.

It is another object of this invention to provide a homogeneous flaked sodium chloride-potassium chloride salt composition which exhibits desirable coarseness, relatively

-5-

low bulk density, caking resistance, attrition resistance, liquid absorption and flowability.

It is another object of this invention to provide a process for preparing said homogeneous flaked sodium chloride-potassium chloride salt composition.

The foregoing objects are attained by a salt composition in flake form characterised in that it is obtained by pulverizing to a particle size smaller than 70 mesh a majority of the particles of an admixture of sodium chloride and potassium chloride containing on a relative proportion basis from 30 to 70 weight percent of sodium chloride and from 70 to 30 weight percent of potassium chloride, and compacting said pulverized admixture into flakes. The flakes are then screened into various particle sizes.

The salt composition of the present invention may also be obtained by separately grinding a majority of the particles of each of the sodium chloride and potassium chloride components to a particle size smaller than 70 mesh, admixing the ground sodium chloride and potassium chloride particles until homogeneous and compacting said admixture into flakes.

The present invention also relates to a process for making a homogeneous flaked salt composition comprising sodium chloride and potassium chloride, which process is characterised in that it comprises thoroughly admixing sodium chloride and potassium chloride in the relative proportions of from 30 to 70 weight percent of sodium chloride and from 70 to 30 weight percent of potassium chloride, pulverizing the majority of the particles of said admixture to a size smaller than 70 mesh U.S. Standard Sieve Series, and compacting said pulverized admixture into flakes.

The present process may also be carried out by separately grinding the majority of the particles of sodium chloride and of potassium chloride to a size smaller than said 70 mesh, thoroughly admixing the ground particles and compacting the admixture into flakes.

In the preferred embodiment of the present invention, the homogeneous flaked salt composition, prepared as described, comprises on a weight basis 50 weight percent of sodium chloride and 50 weight percent of potassium chloride.

For the purpose of snack toppings, a 0.010-inch thickness of flaked product is generally acceptable. A substantially thinner flake would be too fragile and subject to degradation in handling, whereas a substantially thicker flake would lack the large surface area and quick-dissolving properties desired in a topping.

The one exception is "pretzel salt", which is provided in a distinctly greater particle size. This large salt crystal gives a desirable flavour huskiness, or bite, which cannot be duplicated by smaller-sized salt particles. For this product, a 0.020-inch or greater flake thickness is required.

Based upon these product needs, the flaked products of the present invention were chosen at about 0.010-inch and 0.020-inch thickness, although it is understood that the flake thickness may be varied as desired to suit specific needs and that it was not possible to control the compacting, i.e. flaking machinery utilised to precisely and consistently product exactly the desired flake thickness.

As previously stated, feeding a 1:1 admixture of the normal particle size granular forms of sodium chloride and potassium chloride to compacting equipment results in a flaked product which is not homogeneous in the various screened fractions of the compacted (flaked) product. It was surprising and unexpected to discover that the problem of non-homogeneity can be solved by first comminuting the admixture of sodium chloride and potassium chloride, or each component separately, such that a majority of the particles of the admixture or of each component is reduced to a size small enough to pass through a 70 mesh screen, and then subjecting the thus finely divided material to a compacting process to produce a flaked product. The flaked product may then be screened into several particle size fractions for use in various food items.

It was also surprising and unexpected to find that the flaked salt composition of the present invention, when compared with a flaked product prepared without pregrinding to a -70 mesh size, displayed the following desirable attributes in addition to the primary property of substantial homogeneity throughout the various particle size ranges:

1. Coarser flakes, indicative of a more efficient flaking process, as shown by the screen analysis of the final product.

2. Lower bulk density, which is desirable for mixing with other food ingredients which also have a fairly low bulk density.

3. A reduced caking tendency, as shown in caking evaluations after five humidity cycles.

4. Less attrition so that it will hold up better in handling prior to its end usage.

5. Better adsorption and retention of liquids, indicative of more effective mixing with liquid ingredients in blended products.

6. Greater flowability, as indicated by flow properties when the materials are allowed to fall on a slanted board. This increased flowability is desirable in handling of a product in commercial usage.

-8-

For a more complete understanding of the present invention, reference is now made to the following specific examples illustrating the improved flaked salt compositions of this invention.

EXAMPLE 1

Commercially available granular sodium chloride and potassium chloride were each subjected to a screen analysis using U.S. Standard Sieve Series screens. The mesh size distributions obtained are set forth in TABLE I.

TABLE I

| | | % BY WEIGHT | |
| --- | --- | --- | --- |
| Screen Fraction | | KCl | NaCl |
| +20 Mesh | | 0.0 | 0.0 |
| -20 + 30 | | 0.7 | 6.0 |
| -30 + 40 | | 18.1 | 52.8 |
| -40 + 50 | | 38.3 | 32.1 |
| -50 + 70 | | 30.3 | 6.9 |
| -70 + 100 | | 10.8 | 1.3 |
| -100 Mesh | | 1.9 | 0.7 |
| Total* | | 100.1 | 99.8 |

\* Deviation from 100.0% results from rounding

of numbers.

It is seen that the major proportion of the distribution of particle sizes of these granular materials is in the -30 + 70 mesh fractions with only a small percentage of the particles smaller than 70 mesh, as is evident from the following summation of the above results:

| Screen Fraction | % BY WEIGHT | |
|---|---|---|
| | KCl | NaCl |
| -30 + 70 | 86.7 | 91.8 |
| -70 Mesh | 12.7 | 2.0 |

An approximately 1:1 NaCl:KCl homogeneous admixture of the same granular sodium chloride and potassium chloride hereinbefore described was compacted by passing the mixture between the smooth-faced opposed rollers of a large compactor and of a small compactor respectively under high pressure to provide a flake form suitable for a variety of specialized applications, including snack toppings. The flaked product of each compactor was then screened into its several fractions and the sodium chloride content of each fraction of each compactor was determined. The results obtained are set forth in TABLE II.

-10-

## TABLE II

% NaCl By Weight (Difference is KCl)

| Large Compactor | | | Small Compactor | | |
|---|---|---|---|---|---|
| Screen size | % Screenings* | % NaCl | Screen size | % Screenings* | % NaCl |
| +6 Mesh | 8.2 | 52 | +6 Mesh | 4.9 | 55 |
| -6 + 12 | 6.2 | 54 | -6 + 12 | 9.8 | 55 |
| -12 + 20 | 10.3 | 62 | -12 + 20 | 20.7 | 54 |
| -20 + 40 | 33.8 | 64 | -20 + 40 | 21.3 | 50 |
| -40 + 70 | 29.9 | 28 | -40 + 70 | 26.7 | 44 |
| -70 Mesh Total | 11.6 100.0 | 46 | -70 Mesh | 16.6 100.0 | 70 |

*The term "% Screenings" means the % by weight of the total sample found in the particular screen fraction.

It is apparent from the foregoing that the desired 1:1 NaCl:KCl composition of the original mixture is not maintained in the various fractions. This lack of homogeneity is totally unacceptable since it is necessary that each screen fraction of the product conforms substantially to the original composition.

-11-

EXAMPLE 2

A portion of the 1:1 NaCl:KCl admixture of Example 1 was pulverized such that a majority of the particles was substantially of a -70 mesh size. The ground admixture had the following particle size distribution:

| Screen Fraction | % By Weight |
|---|---|
| +20 Mesh | 0.0 |
| -20 + 30 | 0.0 |
| -30 + 40 | 2.1 |
| -40 + 50 | 9.4 |
| -50 + 70 | 14.5 |
| -70 + 100 | 17.8 |
| -100 Mesh | 56.2 |
| Total | 100.0 |
| -70 Mesh | 74.0 |

The statement "substantially -70 mesh" as used herein means that a major proportion of the material is -70 mesh.

The term "Preground", as used herein, means that the NaCl: KCl admixture was pulverized to a particle size substantially -70 mesh, then compacted to form a flaked product, which flaked product was then screened into its various particle sizes. The term "Unground" means that there was no preliminary grinding before compaction into flakes.

As in Example 1, the preground substantially -70 mesh admixture of NaCl and KCl was fed separately to a large compactor and also to a small compactor to form flakes.

The flaked product was screened and the different mesh size portions were analyzed for sodium content. The results set forth in TABLE III show the substantial homogeneity of the several mesh size fractions resulting from compaction after pregrinding the NaCl:KCl admixture to substantially -70 mesh.

## TABLE III

FLAKED PRODUCT OF PULVERIZED (-70 Mesh) MIXTURE OF NaCl:KCl

| | LARGE COMPACTOR | | | SMALL COMPACTOR | |
|---|---|---|---|---|---|
| Screen Size | % Screenings | % NaCl | Screen Size | % Screenings | % NaCl |
| +6 Mesh | 24.4 | 55 | +6 Mesh | 10.2 | 56 |
| -6 + 12 | 8.8 | 55 | -6 + 12 | 11.3 | 55 |
| -12 + 20 | 4.7 | 55 | -12 + 20 | 14.1 | 55 |
| -20 + 40 | 6.8 | 58 | -20 + 40 | 10.7 | 58 |
| -40 + 70 | 24.8 | 54 | -40 + 70 | .24.2 | 53 |
| -70 Mesh | 30.5 | 52 | -70 Mesh | 29.5 | 54 |
| Total | 100.0 | | Total | 100.0 | |

It is informative to analyze the results of Example 1 and Example 2 on the basis of the "weighted mean" of the percent of NaCl in each screen fraction of each flaked product. The weighted mean is derived by weighting each percentage NaCl value obtained based upon the relative abundance of that screened fraction. The following tabulation illustrates how a weighted mean of 54 (all screen fractions) was obtained for the percent NaCl of the preground and flaked product of Example 2 (Large Compactor).

| Screen Fraction of Flaked Product | % Screenings | % NaCl | Calculated Weighted Mean Contribution* |
|---|---|---|---|
| +6 Mesh | 24.4 | 55 | 13.42 |
| -6 + 12 | 8.8 | 55 | 4.84 |
| -12 + 20 | 4.7 | 55 | 2.58 |
| -20 + 40 | 6.8 | 58 | 3.94 |
| -40 + 70 | 24.8 | 54 | 13.39 |
| -70 Mesh | 30.5 | 52 | 15.86 |
| Total | 100.0 | Weighted mean 54.03 % NaCl** | |

&ast; Obtained by multiplying % screenings by % NaCl.

&ast;&ast; Obtained by summing the calculated weighted mean % NaCl for each of the screen fractions.

Similarly, a weighted mean of 49 was obtained for the percent NaCl for all the screenings of the unground flaked product of Example 1 (Large Compactor); a weighted mean of 53 for the unground flaked product of Example 1 (Small Compactor); and a weighted mean of 55 for the preground flaked product of Example 2 (Small Compactor).

A comparison of the results of Example 1 and Example 2 is set forth in TABLE IV.

### TABLE IV

% NaCl By Weight (Difference is % KCl)

| Screen Fraction of Flaked Product | EXAMPLE 1 (ALL UNGROUND) | | EXAMPLE 2 (ALL PREGROUND) | |
|---|---|---|---|---|
| | Large Compactor | Small Compactor | Large Compactor | Small Compactor |
| +6 Mesh | 52 | 55 | 55 | 56 |
| -6 + 12 | 54 | 55 | 55 | 55 |
| -12 + 20 | 62 | 54 | 55 | 55 |
| -20 + 40 | 64 | 50 | 58 | 58 |
| -40 + 70 | 28 | 44 | 54 | 53 |
| -70 Mesh | <u>46</u> | <u>70</u> | <u>52</u> | <u>54</u> |
| Weighted mean (all screen fractions) | 49 | 53 | 54 | 55 |

It is then illuminating to express deviation from the weighted mean for each screen fraction, as shown in TABLE V.

### TABLE V

#### % NaCl by Weight; Deviation from Weighted Mean

| Screen Fraction of Flaked Product | EXAMPLE 1 (ALL UNGROUND) | | EXAMPLE 2 (ALL PREGROUND) | |
| --- | --- | --- | --- | --- |
| | Large Compactor | Small Compactor | Large Compactor | Small Compactor |
| +6 Mesh | +3 | +2 | +1 | +1 |
| -6 + 12 | +5 | +2 | +1 | +0 |
| -12 + 20 | +13 | +1 | +1 | +0 |
| -20 + 40 | +15 | -3 | +4 | +2 |
| -40 + 70 | -21 | -9 | 0 | -2 |
| -70 Mesh | -3 | +27 | -2 | -1 |
| Total (Deviation)$^2$ | 878 | 828 | 23 | 10 |
| Standard Deviation | 13.3 | 12.9 | 2.1 | 1.4 |

The "Total (Deviation)$^2$" and "Standard Deviation" are defined as follows:

Total (Deviation)$^2$ is the sum of the squares of the individual deviations.

Standard Deviation is the square root of the number obtained by dividing the Total (Deviation)$^2$ by one less than the number of values determined. The relatively small Standard Deviations obtained for the Preground products as compared to the relatively high Standard Deviations for the Unground products attest to the relative homogeneity of the flaked compositions of the present invention.

-16-

COARSENESS OF FLAKE

The % Screenings of the unground compacted NaCl:KCl admixture of TABLE II and the % Screenings of the preground compacted admixture of TABLE III are set forth for comparative purposes in TABLE VI.

TABLE VI

| Screen Size | Large Compactor % Screenings | | Small Compactor % Screenings | |
|---|---|---|---|---|
| | Unground | Preground | Unground | Preground |
| +6 Mesh | 8.2 | 24.4 | 4.9 | 10.2 |
| -6 + 12 | 6.2 | 8.8 | 9.8 | 11.3 |
| -12 + 20 | 10.3 | 4.7 | 20.7 | 14.1 |
| -20 + 40 | 33.8 | 6.8 | 21.3 | 10.7 |
| -40 + 70 | 29.9 | 24.8 | 26.7 | 24.2 |
| -70 Mesh | 11.6 | 30.5 | 16.6 | 29.5 |
| Total | 100.0 | 100.0 | 100.0 | 100.0 |

"Coarse" flakes are defined herein as those which are of a size larger than +12 mesh.  It is noted from TABLE VI that there is a marked increase in the percent of coarse flakes in the instance of the preground flaked product when compared with the unground flaked product, as is shown in TABLE VII.

## TABLE VII

| Screen Size | Large Compactor % Screenings | | Small Compactor % Screenings | |
|---|---|---|---|---|
| | Unground | Preground | Unground | Preground |
| +6 Mesh | 8.2 | 24.6 | 4.9 | 10.2 |
| -6 + 12 Mesh | 6.2 | 8.8 | 9.8 | 11.3 |
| +12 Mesh(Total) | 14.4 | 33.3 | 14.7 | 21.5 |

The percentage increase in flake coarseness (+12 mesh fraction) for the Preground compositions over the Unground is shown in the following comparison:

| | Unground | Preground | % Increase |
|---|---|---|---|
| Large Compactor | 14.4 | 33.2 | 131* |
| Small Compactor | 14.7 | 21.5 | 46** |

$$*\frac{(33.2 - 14.4)}{14.4} \times 100 = 131\%$$

$$**\frac{(21.5 - 14.7)}{14.7} \times 100 = 46\%$$

## EXAMPLE 3

The bulk density of each screen fraction of the flaked products prepared from the unground and from the preground admixtures of NaCl and KCl described in Examples 1 and 2 was determined as follows:

## BULK DENSITY

### A.  Loose Density

A tared Berzelius (tall form, no spout) beaker of known volume was filled with sample by means of a funnel suspended 3 inches above the rim until the sample was slightly higher than the beaker.  The excess sample was levelled with a spatula, leaving the tip of the sample level with the beaker rim.  Care was taken not to pack the sample.  The sample was then weighed, and density calculated to give the values in TABLE VIII.

### TABLE VIII
### Loose Bulk Density (pounds/cubic foot)

| Screen Fraction | LARGE COMPACTOR | | SMALL COMPACTOR | |
|---|---|---|---|---|
| | Unground | Preground | Unground | Preground |
| -6 + 12 | 48.1 | 47.9 | 43.4 | 46.2 |
| -12 + 20 | 51.8 | 48.3 | 47.2 | 46.7 |
| -20 + 40 | 61.9 | 57.8 | 48.7 | 49.2 |
| -40 + 70 | 61.2 | 61.7 | 56.4 | 54.6 |
| -70 Mesh | 55.5 | 60.4 | 56.7 | 52.1 |

(1 pound/cubic foot = 16.21 Kg/cubic metre)

### B.  Packed Density

The sample was added to a 250-ml graduated cylinder to fill to the 250-ml mark.  The cylinder was placed on a Syntron Vibrator and vibrated for 1 minute.  The volume after packing was recorded, the sample was weighed, and the density calculated, giving the values in TABLE IX.

-19-

TABLE IX

Packed Bulk Density (Pounds/Cubic Foot)

| Screen Fraction | Large Compactor | | Small Compactor | |
|---|---|---|---|---|
| | Unground | Preground | Unground | Preground |
| -6 + 12 | 62.4 | 57.5 | 49.5 | 54.4 |
| -12 + 20 | 62.9 | 60.5 | 55.6 | 55.7 |
| -20 + 40 | 72.6 | 69.8 | 61.8 | 61.7 |
| -40 + 70 | 75.3 | 75.0 | 69.4 | 69.2 |
| -70 Mesh | 72.2 | 75.2 | 70.1 | 67.8 |

It is misleading to compare bulk density directly for unground vs. preground products, since the flaked products differed in average particle thickness. However, if a correction is applied to compensate for difference in thickness, a fairer comparison can be made. Arbitrarily, such a correction can be accomplished by dividing bulk density for a given screen fraction by average particle thickness for that fraction. TABLE X presents particle thickness measurements on various screen fractions.

## TABLE X

### Particle Thickness (mils)

| Item | Large Compactor | | Small Compactor | |
|---|---|---|---|---|
| | Unground | Preground | Unground | Preground |
| **-6 + 12 Mesh** | | | | |
| Average | 21.2 | 23.1 | 9.5 | 11.3 |
| Range | 15.5-31.9 | 14.1-31.2 | 6.2-17.0 | 7.9-16.0 |
| Standard Deviation | 3.6 | 4.6 | 2.7 | 1.7 |
| **-12 + 20 Mesh** | | | | |
| Average | 15.8 | 19.4 | 7.6 | 9.3 |
| Range | 9.0-24.7 | 13.0-24.6 | 4.8-10.8 | 6.0-11.8 |
| Standard Deviation | 3.7 | 3.1 | 1.7 | 1.8 |
| **-20 + 40 Mesh** | | | | |
| Average | 12.4 | 14.3 | 7.3 | 9.2 |
| Range | 8.0-17.8 | 8.0-16.2 | 4.4-11.0 | 6.6-11.7 |
| Standard Deviation | 2.6 | 2.3 | 2.1 | 1.5 |

Dividing bulk density by average particle thickness for each sample gives a "corrected" bulk density, for purposes of comparison, as in TABLES XI and XII.

0090571

-21-

<u>TABLE XI</u>

<u>Corrected Packed Bulk Density</u>

<u>(Packed Bulk Density ÷ Thickness)</u>

<u>LARGE COMPACTOR</u>

| Screen Fraction | Unground | Preground | $\Delta$ * | % $\Delta$ ** |
|---|---|---|---|---|
| -6 + 12 | 2.94 | 2.49 | 0.45 | 15.3 |
| -12 + 20 | 3.98 | 2.62 | 1.36 | 34.2 |
| -20 + 40 | 5.85 | 4.88 | 0.97 | 16.6 |

<u>TABLE XII</u>

<u>Corrected Packed Bulk Density</u>

<u>(Packed Bulk Density ÷ Thickness)</u>

<u>SMALL COMPACTOR</u>

| Screen Fraction | Unground | Preground | $\Delta$ * | % $\Delta$ ** |
|---|---|---|---|---|
| -6 + 12 | 5.21 | 4.21 | 1.00 | 19.2 |
| -12 + 20 | 5.85 | 5.98 | -0.13 | 0.02 |
| -20 + 40 | 8.47 | 6.71 | 1.76 | 20.8 |

\* Unground minus Preground

\*\* $\dfrac{\text{Unground-Preground}}{\text{Unground}} \times 100$

The foregoing data and analysis demonstrate the bulk density reductions obtained for the flaked salt compositions formed by compacting after the indicated pregrinding step.

## EXAMPLE 4

The caking properties of each screen fraction of the flaked products prepared from the unground and from the preground admixtures of NaCl and KCl described in Examples 1 and 2 respectively were determined as follows.

### Caking

This test was run using standard-size salt cellars containing 10-gram samples in groups of 5, plus 5 extra cellars to determine number of cycles required to obtain caking.

A cycle consists of placing the cellars in a humidity cabinet at 90-95% relative humidity and 90°F for 8-hours, followed by 16 hours in an oven at 160°F. After each cycle, one cellar is checked to determine approximate amount of caking.

When extensive caking does occur, the set (5 cellars) is emptied onto a 14-mesh screen and vibrated (no hammer) on a "Ro-Tap" device for exactly 30 seconds. The caked salt on the screen is then weighed and % caking is calculated.

In the event that a sample appears caked, but will not hold together for the required Ro-Tap time, additional cycles would be required on another set of samples.

The results obtained are set forth in TABLE XIII.

### TABLE XIII

#### % Caked After 5 cycles

| Screen Fraction | LARGE COMPACTOR | | SMALL COMPACTOR | |
|---|---|---|---|---|
| | Unground | Preground | Unground | Preground |
| -6 + 12 Mesh | 30 | 13 | 26 | 21 |
| -12 + 20 Mesh | 30 | 12 | 39 | 21 |

-23-

EXAMPLE 5

The susceptibility to breakage (attrition) was determined as follows on the -6 + 12 mesh and -12 + 20 mesh screen fractions of the flaked products prepared from the unground and preground NaCl:KCl admixtures described in Examples 1 and 2.

Attrition

This test subjects flakes to controlled agitation, then measures the amount of breakage.

A 20-gram sample of the flaked 1:1 mixture was placed on a 25 mesh screen along with 2 ping pong balls, and agitated on a Ro-Tap for 15 minutes (with the hammer activated); the weight of the -25 mesh fraction is then determined as a measure of attrition. Agitation for another 15 minutes gives the more significant cumulative attrition after 30 minutes.

Weight of -25 mesh fraction x 5 = % attrition. Values are given in TABLE XIV.

TABLE XIV

| Screen Fraction | % Attrition | | | |
|---|---|---|---|---|
| 15 minutes | Unground | Preground | Unground | Preground |
| - 6 + 12 Mesh | 17 | 12 | 25 | 26 |
| -12 + 20 Mesh | 23 | 16 | 53 | 58 |
| 30 minutes | | | | |
| - 6 + 12 Mesh | 31 | 23 | 37 | 35 |
| -12 + 20 Mesh | 43 | 33 | 68 | 51 |

EXAMPLE 6

The -6 + 12 mesh and -12 + 20 mesh screen fractions of the unground and preground flaked compositions of Examples 1 and 2 were used to test for liquid adsorption and retention according to the following procedure.

Liquid Adsorption and Retention

A 10-gram sample of each flaked fraction was placed in a 100-ml beaker, and 20-30 ml of glacial acetic acid added. After a 1 minute contact time, excess acid was removed by suction filtering through a Gelman glass fibre filter for 1 minute. The sample was weighed, then dried at 100°C for two hours. After the dry sample cooled to room temperature, it was reweighed to determine the weight in milligrams (mg) of acetic acid retained per gram of flaked salt composition. The results are set forth in TABLE XV.

TABLE XV

(Adsorption (mg Acetic Acid/gram Flaked Salt Composition)

| Screen Fraction | LARGE COMPACTOR | | SMALL COMPACTOR | |
|---|---|---|---|---|
| | Unground | Preground | Unground | Preground |
| - 6 + 12 Mesh | 34 | 94 | 134 | 121 |
| -12 + 20 Mesh | 63 | 93 | 87 | 99 |

Again, a direct comparison of liquid adsorption is not justified, since the products differ in average thickness and therefore in surface area. Therefore, this difference is corrected for by multiplying by the average particle thickness (set forth in TABLE X), which provides a fairer comparison, as in TABLE XVI.

-25-

## TABLE XVI

### Corrected Adsorption
(Adsorption x Average Thickness)

| Screen Factor | Large Compactor | | Small Compactor | |
| --- | --- | --- | --- | --- |
| | Unground | Preground | Unground | Preground |
| -6 + 12 | 721 | 2171 | 1273 | 1367 |
| -12 + 20 | 995 | 1804 | 661 | 921 |

## EXAMPLE 7

The flowability characteristics of flaked salt compositions made from the unground and preground NaCl:KCl salt compositions of Examples 1 and 2 were determined on the -6 + 12 mesh and -12 + 20 mesh screen fractions by the following procedure.

## Flowability

This test measures the quantity of flaked salt mixture that fails to adhere when dropped onto a sloped surface. The surface used was a piece of grained plastic-covered hardboard 12 inches wide. A fixed quantity of sample was dropped through a funnel fixed in place onto the hardboard sloped at a specific angle (24°). The % flowability is the amount of sample which falls off of the hardboard surface, as given in TABLE XVII.

0090571

-26-

## TABLE XVII

### % Flowability (24° Slope)

| Screen Fraction | Large Compactor | | Small Compactor | |
|---|---|---|---|---|
| | Unground | Preground | Unground | Preground |
| 3-inch Drop | | | | |
| -6 + 12 Mesh | 82 | 94 | 4 | 89 |
| -12 + 20 Mesh | 5 | 25 | 2 | 2 |
| 4-inch Drop | | | | |
| -6 + 12 Mesh | 93 | 99 | 81 | 95 |
| -12 + 20 Mesh | 11 | 15 | 43 | 68 |

-27-

CLAIMS

1. A process for making a substantially homogeneous flaked composition comprising NaCl and KCl which process is characterised in that it comprises:
   A. admixing NaCl and KCl,
   B. pulverizing the majority of the particles of said admixture to a particle size smaller than 70 mesh U.S. Standard Sieve Series, and
   C. compacting said pulverized admixture into flakes.

2. The process claimed in claim 1 characterised in that the concentration of NaCl and KCl in the composition ranges from 30% NaCl and 70% KCl by weight to 70% NaCl and 30% KCl by weight.

3. The process claimed in claim 2, characterised in that the concentration of NaCl and KCl in the composition ranges from 40% NaCl and 60% KCl to 60% NaCl and 40% KCl and is preferably substantially 50% NaCl and 50% KCl by weight.

4. The process of any of the preceding claims characterised in that the thickness of the flakes ranges from 0.01 inch to 0.025 inch.

5. The process of any of the preceding claims characterised in that the flakes are ground and screened into various particle size ranges for use with a variety of snack foods.

6. A substantially homogeneous salt composition in flaked form characterised in that it is obtained by pulverizing to a particle size smaller than 70 mesh U.S. Standard Sieve Series a majority of the particles of an admixture of sodium chloride and potassium chloride containing on a relative proportion basis from 30 to 70 weight percent of sodium chloride and from 70 to 30 weight percent of potassium chloride and compacting said pulverised admixture

0090571

-28-

into flakes.

7. The composition claimed in claim 6, wherein on a relative proportion basis the admixture of sodium chloride and potassium chloride contains from 40 to 60 percent by weight of sodium chloride and from 60 to 40 percent by weight of potassium chloride, and is preferably substantially 50 percent by weight of sodium chloride and 50 percent by weight of potassium chloride.

8. The composition claimed in either of claims 6 or 7, characterised in that the thickness of the flakes ranges from about 0.01 to about 0.25 inch.

9. A substantially homogeneous salt composition in flake form characterised in that it is obtained by separately pulverizing a majority of the particles of sodium chloride and potassium chloride each to a particle size smaller than about 70 mesh, admixing the pulverized sodium chloride and potassium chloride in the proportions on a relative weight basis of from 30 to 70 weight percent of sodium chloride and from 70 to 30 weight percent of potassium chloride to form a substantially homogeneous admixture, and compacting said admixture into flakes.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| D,A | US-E- 27 981 (R.L. FRANK et al.)<br>* Claims 1, 3 *<br><br>--- | | A 23 L 1/237 |
| A | GB-A- 789 565 (AJINOMOTO K.K.)<br><br>* Claim 1 *<br><br>----- | | |

TECHNICAL FIELDS SEARCHED (Int. Cl. 3)

A 23 L 1/22
A 23 L 1/237

The present search report has been drawn up for all claims

| Place of search | Date of completion of the search | Examiner |
|---|---|---|
| BERLIN | 03-06-1983 | SCHULTZE D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82